Europäisches Patentamt

European Patent Office

Office européen des brevets

(19)

(11) **EP 0 996 860 B1**

(12) **FASCICULE DE BREVET EUROPEEN**

(45) Date de publication et mention
de la délivrance du brevet:
**16.03.2005 Bulletin 2005/11**

(21) Numéro de dépôt: **99918059.9**

(22) Date de dépôt: **12.05.1999**

(51) Int Cl.⁷: $G01S\ 13/90$, G01S 13/00

(86) Numéro de dépôt international:
**PCT/FR1999/001139**

(87) Numéro de publication internationale:
**WO 1999/058997 (18.11.1999 Gazette 1999/46)**

(54) **DISPOSITIF D'INTERFEROMETRIE RADAR**

VORRICHTUNG FÜR INTERFEROMETRISCHEN RADAR

RADAR INTERFEROMETRY DEVICE

(84) Etats contractants désignés:
**AT BE CH CY DE DK ES FI FR GB GR IE IT LI LU
MC NL PT SE**

(30) Priorité: **13.05.1998 FR 9806016**

(43) Date de publication de la demande:
**03.05.2000 Bulletin 2000/18**

(73) Titulaire: **CENTRE NATIONAL D'ETUDES
SPATIALES
75001 Paris (FR)**

(72) Inventeur: **MASSONNET, Didier
F-31650 Saint Orens de Gameville (FR)**

(74) Mandataire: **Schrimpf, Robert et al
Cabinet Regimbeau
20, rue de Chazelles
75847 Paris cedex 17 (FR)**

(56) Documents cités:
- **MASONNET D: "SATELLITE RADAR
  INTERFEROMETRY" SCIENTIFIC AMERICAN,
  vol. 276, no. 2, février 1997 (1997-02), pages
  46-53, XP000696084**
- **ZEBKER H A ET AL: "MAPPING THE WORLD'S
  TOPOGRAPHY USING TADAR
  INTERFEROMETRY: THE TOPSAT MISSION"
  PROCEEDINGS OF THE IEEE, vol. 82, no. 12, 1
  décembre 1994 (1994-12-01), pages 1774-1786,
  XP000492720**
- **FREEMAN A ET AL: "SAR APPLICATIONS IN
  THE 21ST CENTURY" ARCHIV FUR
  ELEKTRONIK UND UBERTRAGUNGSTECHNIK,
  vol. 50, no. 2, 1 mars 1996 (1996-03-01), pages
  79-84, XP000595503**

## Description

L'invention concerne un dispositif d'interférométrie radar et des applications de ce dispositif.

Ces dernières années, l'imagerie par radar s'est enrichie des possibilités spectaculaires offertes par la combinaison cohérente de plusieurs images radar, comme cela est illustré notamment dans les publications suivantes :

- Goldstein, R. and Zebker, H. «Interferometric radar measurements of ocean surface currents» Nature,328, 707-709, 1987
- Prati, C. and Rocca, F. «Improving slant-range resolution with multiple SAR surveys» IEEE trans. Aerospace Elec. Sys., 29, 135-43, 1993
- Zebker, H. and Goldstein, R. «Topographic mapping from interferometric SAR observation» J. Geophys. Res., 91, 4993-5001, 1986
- Massonnet, D. and Rabaute, T. «Radar interferometry: limits and potential» IEEE trans. Geosc. And Remote Sensing., 31, 455-464, 1993

La présente invention a pour objet un dispositif d'interférométrie radar comprenant au moins un satellite émetteur et au moins une constellation de satellites récepteurs, caractérisé en ce que les satellites récepteurs sont placés sur des orbites qui sont choisies de façon que les satellites récepteurs visent la zone éclairée au sol par le satellite émetteur et dont :

- leurs grands axes ont même longueur, de sorte que les satellites récepteurs sont rigoureusement synchrones,
- leurs foyers sont séparés par une distance qui est la même pour chacune des orbites des satellites récepteurs et qui est supérieure à la distance des foyers de l'orbite du satellite émetteur, en sorte que l'excentricité de l'orbite d'un satellite récepteur diffère de celle de l'orbite du satellite émetteur,

  - les arguments de leurs périgées ont des valeurs réparties régulièrement sur 360° en sorte que pendant une période orbitale les satellites récepteurs parcourent une ellipse sur laquelle ils sont répartis régulièrement, ladite ellipse étant centrée sur la position qu'aurait le satellite émetteur si son orbite avait même longitude du noeud ascendant et même phasage que les orbites des satellites récepteurs.
    De préférence les satellites récepteurs visent en permanence la zone éclairée au sol par le satellite émetteur mais, selon les applications, on peut admettre que les satellites récepteurs visent seulement le plus souvent ou même seulement occasionnellement la zone éclairée par le satellite émetteur.

La constellation de récepteurs passifs permet de réaliser toutes les possibilités du radar en utilisant un satellite radar existant comme source. La constellation proposée est peu coûteuse, du fait de son caractère passif.

De préférence, le satellite émetteur est synchrone des satellites récepteurs.

De préférence, la constellation comporte un ou plusieurs groupes de trois satellites récepteurs placés sur une ou plusieurs ellipses concentriques.

Le satellite émetteur fait partie de la constellation ou en est indépendant, selon les réalisations.

De préférence, les récepteurs radar sont conçus pour enregistrer en continu le signal de la zone éclairée au sol par le satellite émetteur, des moyens étant prévus pour resynchroniser le signal ainsi enregistré sous forme de lignes successives rangées par distances croissantes.

Avantageusement, le satellite émetteur est choisi dans le groupe des satellites d'observations radar tels que ERS-1, ERS-2, Radarsat et J.ERS-1.

L'invention sera encore expliquée ci-après en référence aux figures du dessin joint sur lequel :

- les figures 1 & 2 sont des schémas relatifs à la définition de la résolution en azimut et de l'interférométrie le long de la trace ;
- la figure 3 est un schéma relatif à la définition de la résolution en distance et de l'interférométrie perpendiculaire ;
- les figures 4 & 5 sont des schémas de constellations de satellites récepteurs radar conformes à la présente invention ;
- la figure 6 est analogue à la figure 4 ; et
- la figure 7 est un schéma en vue de côté d'un satellite émetteur utilisé dans un mode de réalisation de l'invention.

Résolution en azimut

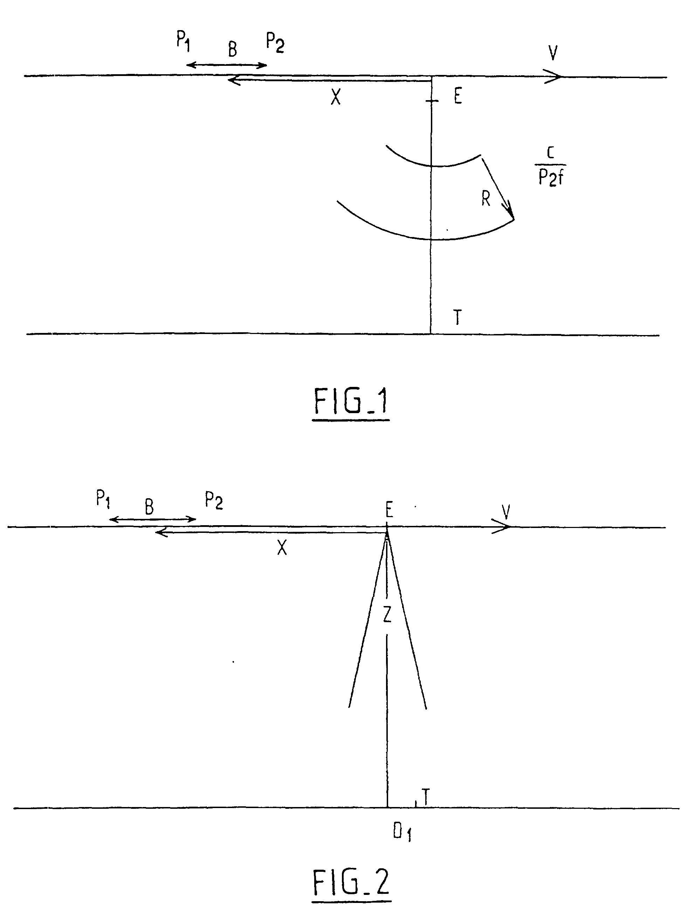

Sur les figures 1 & 2, les références $P_1$ et $P_2$ désignent deux satellites récepteurs radar, la référence E désigne un satellite émetteur radar et T désigne une cible radar au sol.

Le satellite émetteur E est un satellite radar classique qui émet et reçoit des impulsions pour en faire des images, tel ERS-1, et le rayonnement est utilisé d'une autre manière à l'aide des deux satellites passifs récepteurs $P_1$ et $P_2$ situés sur des orbites de même période que E.

Le satellite E rythme la cadence des impulsions radar pour ses besoins propres. La fréquence de répétition des impulsions est appelée prf. Entre deux impulsions, E, $P_1$ et $P_2$ parcourent la distance D. La distance entre E et T est R. La distance entre E et le centre de $P_1$ et $P_2$ est X. La distance entre $P_1$ et $P_2$ est B.

Les calculs qui suivent supposent que les satellites parcourent des trajectoires rectilignes à la vitesse v (donc v=prf*D). La courbure des orbites altère légèrement ces résultats de principe, sans en changer la nature ni l'ordre de grandeur. De même, si ET n'était pas perpendiculaire à la vitesse, dans le cas d'une prise de vue à Doppler non nul, on pourrait suivre le même raisonnement en remplaçant E par E', à l'aplomb de T, et en redéfinissant X et R en conséquence.

La différence des distances entre la cible T et les récepteurs $P_1$ et $P_2$ ne dépend pas de la position de E, car le parcours de l'onde est commun sur le trajet (E, T). Elle vaut:

$$\Delta_1 = \sqrt{R^2 + \left(X + \frac{B}{2}\right)^2} - \sqrt{R^2 + \left(X - \frac{B}{2}\right)^2}$$

A l'impulsion suivante, cette différence devient :

$$\Delta_1 = \sqrt{R^2 + \left(X - D + \frac{B}{2}\right)^2} - \sqrt{R^2 + \left(X - D - \frac{B}{2}\right)^2}$$

Compte tenu de la faible valeur relative de D et B, nous avons:

$$\Delta_1 \approx \frac{BX}{\sqrt{R^2 + X^2}} \qquad \text{et} \qquad \Delta_2 \approx \frac{B(X - D)}{\sqrt{R^2 + X^2}}$$

La différence de marche entre $P_1$ et $P_2$ est donc, par rapport à T:

$$\Delta_1 - \Delta_2 \approx \frac{B\,D}{\sqrt{R^2 + X^2}}$$

Si la longueur d'onde du radar E est $\lambda$, on définit la base critique $B_c$ par:

$$B_c = \frac{\lambda}{D}\sqrt{R^2 + X^2}$$

Cette grandeur définit l'écartement des récepteurs à partir duquel la différence de marche en provenance d'une même cible change de plus de la longueur d'onde entre deux impulsions successives, ce qui correspond à une différence d'effet Doppler supérieure ou égale à prf, pour la même cible, entre les deux récepteurs. Les signaux enregistrés par les récepteurs sont alors indépendants, ils ne permettent plus de créer des franges d'interférences par combinaison de leurs phases. En revanche, la combinaison de ces signaux permet d'améliorer d'un facteur deux la résolution, par une procédure similaire à celle du mode SPOTLIGHT, mais en technique passive.

Pour un satellite en bande C du type d'ERS-1, Bc vaut environ 10 km.

Le même raisonnement s'applique à plus de deux récepteurs. Ainsi, trois récepteurs placés à des intervalles de 10 km sur la même orbite permettent d'obtenir une résolution de deux mètres à partir de données d'ERS-1, améliorant ainsi la résolution d'un facteur 3.

Interférométrie le long de la trace

Si la distance B entre les récepteurs est inférieure à $B_c$, les signaux qu'ils reçoivent sont indépendants dans la proportion $B/B_C$, mais cohérents pour le reste. En particulier, si la cible T est vue par le récepteur $P_1$ sous un certain Doppler, elle peut être vue quelques instants plus tard, sous le même Doppler par le récepteur $P_2$, pourvu que B soit inférieure à $B_c$. Plus précisément, en utilisant les notations de la figure 2, la variation de distance entre l'émetteur E, la cible T et le récepteur $P_1$, d'une impulsion à la suivante, est la différence de:

$$\Delta_1 = \sqrt{R^2 + D_1{}^2} - \sqrt{R^2 + (D_1 - D)^2}$$

et de :

$$\Delta_2 = \sqrt{R^2 + \left(X + D_1 + \frac{B}{2}\right)^2} - \sqrt{R^2 + \left(X + D_1 - D + \frac{B}{2}\right)^2}$$

Pour le récepteur $P_2$, et dans le cas général où la cible T occupe une autre position $D_2$, cette différence devient la différence entre:

$$\Delta_3 = \sqrt{R^2 + D_2{}^2} - \sqrt{R^2 + (D^2 - D)^2}$$

et

$$\Delta_4 = \sqrt{R^2 + \left(X + D_2 - \frac{B}{2}\right)^2} - \sqrt{R^2 + \left(X + D_2 - D - \frac{B}{2}\right)^2}$$

Pour observer la cible T sous le même Doppler avec chacun des récepteurs, il faut trouver une condition où:

$$\Delta_1 + \Delta_2 = \Delta_3 + \Delta_4$$

ou encore :

$$\Delta_1 - \Delta_3 = \Delta_4 - \Delta_2$$

La condition s'exprime, au premier ordre, par:

$$\frac{D}{R}(D_1 - D_2) = \frac{D}{\sqrt{R^2 + X^2}}(D_2 - D_1 - B)$$

$$\left(\frac{\sqrt{R^2 + X^2}}{R} + 1\right)(D_2 - D_1) = B$$

$(D_2 - D_1)$ doit être inférieure à la largeur Z éclairée par l'antenne de l'émetteur, pour que la cible T doit trouve éclairée dans les deux cas.

En pratique, la limite de la méthode sera plutôt dans la durée de la cible T. Ainsi, dans le cas de courants marins, les cibles sont des éléments de la surface de l'eau. Si la durée de vie de ces cibles éphémères est de 0.1 seconde, par exemple, il faut imposer: $(D_2 - D_1) < 0.1\ v$

Résolution en distance

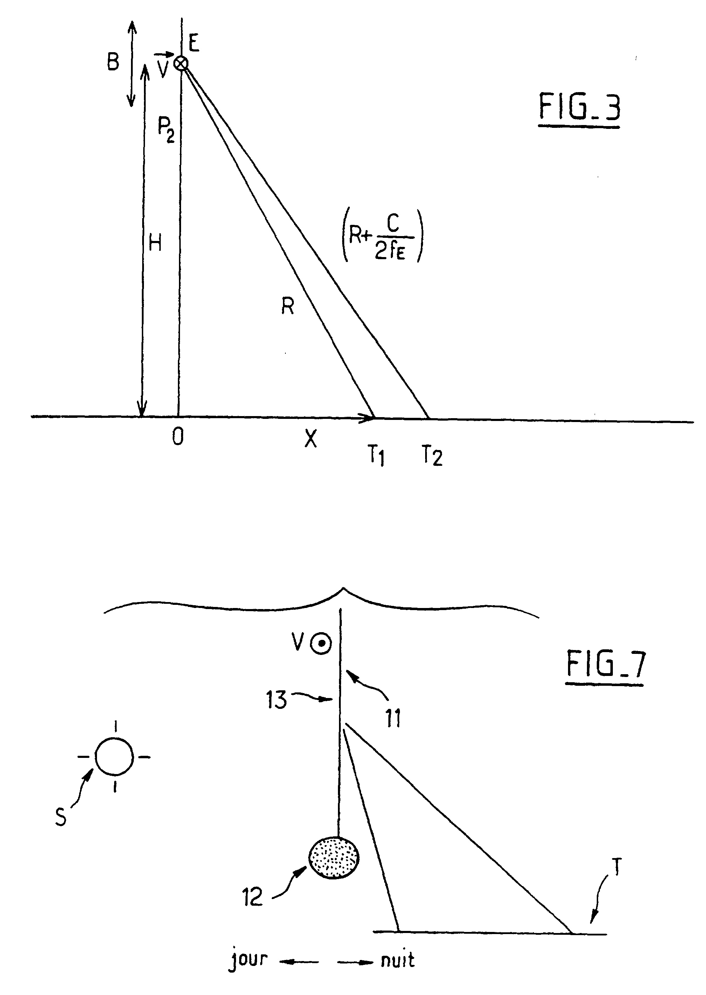

Supposons la configuration décrite par la figure 3, dans un plan perpendiculaire à la vitesse. La figure représente E, $P_1$ et $P_2$ ainsi que deux cibles $T_1$ et $T_2$ au sol. La figure suppose que E, $P_1$ et $P_2$ occupent le même plan orbital, ce qui n'est pas rigoureusement nécessaire.

Le satellite E envoie des impulsions radar dans une certaine largeur de bande pour ses besoins propres. La fréquence d'échantillonnage critique correspondante est appelée $f_e$. La distance entre E et $T_1$ est R. La distance entre

E et $T_2$ est R+c/$2f_e$. La distance entre $P_1$ et $P_2$ est B. La distance entre $T_1$ et O est X. La distance entre E et O est H.

Les distances entre la cible $T_1$ et les récepteurs $P_1$ et $P_2$ ne dépendent pas de la position de E, car le parcours de l'onde est commun sur le trajet (E, T). Elles valent :

$$\Delta_{p1t1} = \sqrt{X^2 + \left(H + \frac{B}{2}\right)^2}$$

$$\Delta_{p2t1} = \sqrt{X^2 + \left(H - \frac{B}{2}\right)^2}$$

$$\Delta_{p1t1} - \Delta_{p2t1} \approx \frac{BH}{R}$$

Pour la cible $T_2$, ces différences deviennent:

$$\Delta_{p1t2} = \sqrt{X'^2 + \left(H - \frac{B}{2}\right)^2}$$

$$\Delta_{p2t2} = \sqrt{X'^2 + \left(H + \frac{B}{2}\right)^2}$$

avec :

$$\sqrt{X'^2 + H^2} = R + \frac{c}{2f_e}$$

par suite:

$$\Delta_{p1t2} - \Delta_{p2t2} \approx \frac{BH}{R}\left(1 - \frac{c}{2f_e}\right)$$

à l'aide de la longueur d'onde $\lambda$, on définit un autre type de base critique $B_{cp}$ par:

$$B_{cp} = \frac{2f_c\lambda R^2}{Hc}$$

Cette grandeur définit l'écartement vertical des récepteurs à partir duquel la différence de marche en provenance de deux échantillons successifs change de plus de la longueur d'onde. Comme précédemment, les signaux enregistrés par les récepteurs sont indépendants et ne permettent plus de créer des franges d'interférences par combinaison de leurs phases. En revanche, la combinaison de ces signaux permet d'améliorer d'un facteur deux la résolution en distance.

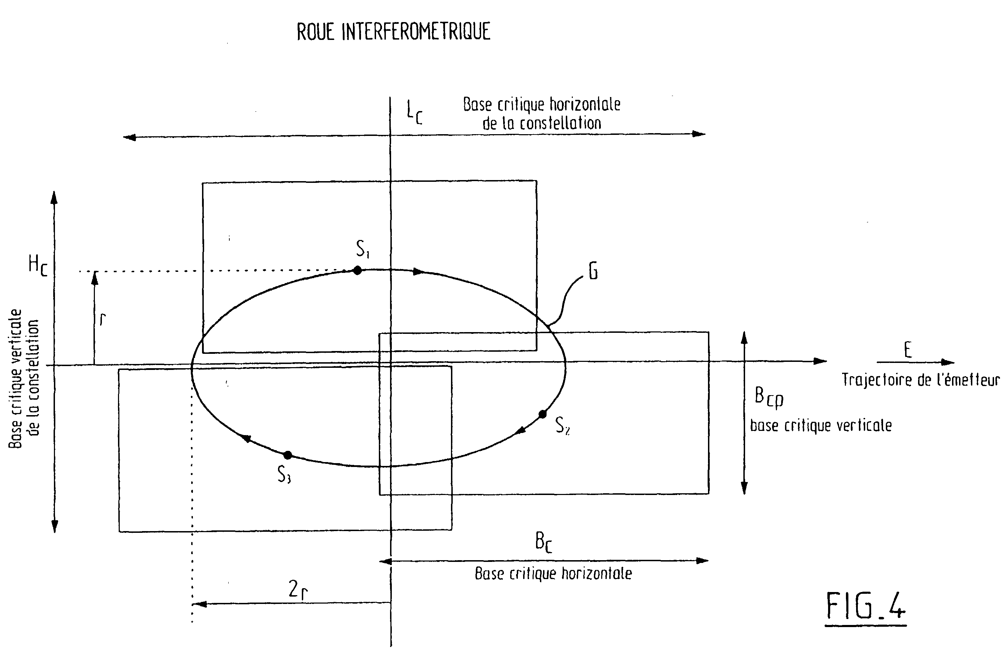

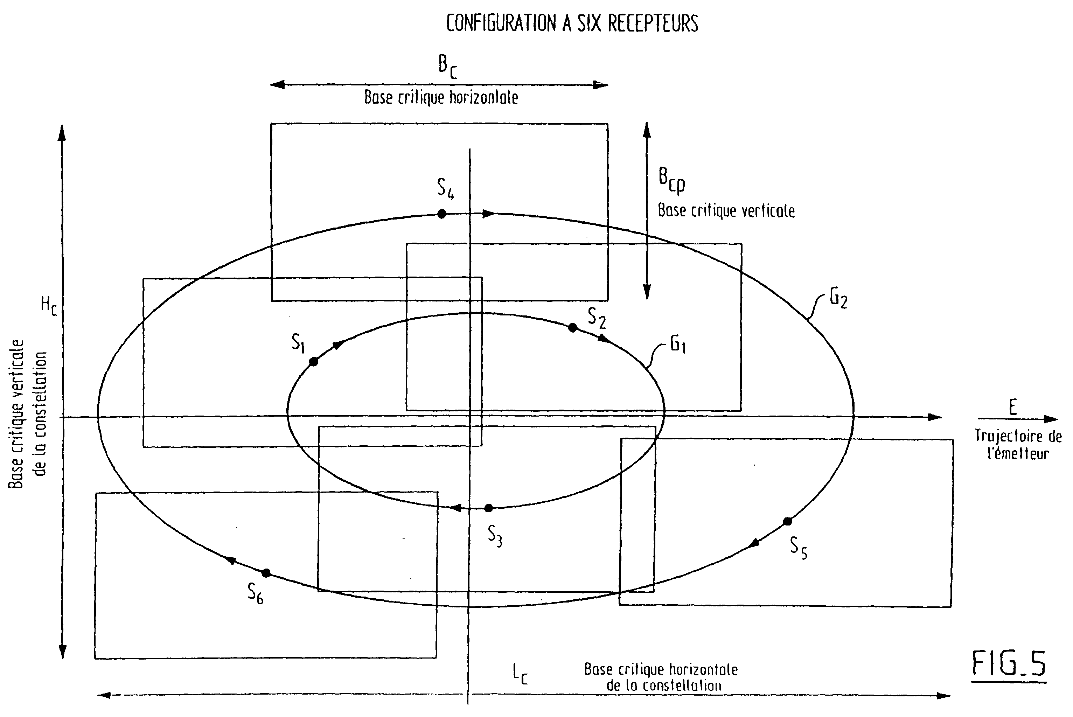

Dans la suite, on appellera surface interférométrique le domaine centré sur le récepteur, dans le plan de l'orbite, dont la longueur est égale à $B_C$ et la hauteur est égale à $B_{cp}$ (figures 4 et 5).

Pour un satellite en bande C du type d'ERS-1, $B_{cp}$ vaut environ 5 km. Le même raisonnement s'applique à plus de deux récepteurs. Ainsi, trois récepteurs placés à des intervalles de 5 km verticalement permettent d'obtenir une résolution au sol d'environ six mètres, perpendiculairement à la trace, à partir de données d'ERS-1 pour lesquelles cette résolution est de 20 m.

Du fait de la forme de l'ellipse relative G, il est avantageux que la base $B_c$ soit à peu près égale au double de la base $B_{cp}$, il faudrait: $HP_D \approx 2RP_A$ où $P_D$ et $P_A$ sont les tailles de pixel en distance et azimut (respectivement

égales à $\frac{c}{2f_e}$ et D). Comme on l'a vu, les satellites ERS-1 et ERS-2 remplissent approximativement cette condition. Un satellite tel que Radarsat peut également la remplir. De toute façon, les bases $B_c$ et $B_{cp}$ sont variables dans une image, et leurs valeurs doivent être prises à titre indicatif.

Dans le cadre de l'invention, on accepte de recueillir les données avec une petite antenne (compatible avec un micro-satellite). L'isolation des images contre les ambiguïtés radar en distance comme en azimut est donc dégradée par rapport à celle de l'émetteur, pour lequel la contribution des ambiguïtés est réduite à l'aller et au retour de l'onde, contre l'aller seul pour l'image des récepteurs. Il est difficile de quantifier dans l'absolu la perte de qualité liée à la montée des ambiguïtés en distance et en azimut car elle dépend des caractéristiques de l'antenne de l'émetteur. En revanche, on peut remarquer que les ambiguïtés ne participent pas à la combinaison cohérente. En effet, la combinaison cohérente des images suppose l'étape préalable de superposition des images des récepteurs. Cette superposition est optimisée sur l'image principale, non ambiguë.

Les images fantômes correspondant aux ambiguïtés en distance, c'est à dire provenant de la poursuite de l'écho de l'impulsion précédente (plus loin perpendiculairement à la trace) ou bien au début de l'écho de l'impulsion suivante (sur des cibles plus proches de la trace), ne sont pas superposées. En effet, pour produire une information topographique, les récepteurs doivent observer depuis des points de vue légèrement décalés. La variation d'incidence qui résulte de ce décalage ne doit pas excéder une valeur critique de sorte que le décalage progressif des deux images reste inférieur à, typiquement, une longueur d'onde par pixel. Le décalage relatif doit donc rester inférieur au rapport de la fréquence d'échantillonnage et de la fréquence porteuse, soit typiquement 0,3% à 1% selon les satellites. La limite inférieure de ce décalage correspond à la nécessité de créer un effet topographique. Il ne saurait être inférieur au dixième de la limite ultime ci-dessus. On peut donc assurer que le décalage relatif entre les images atteint au moins 0,03% à 0.1%. Sur le plan géométrique, cela revient à égaler le rayon de la roue au dixième de la « base verticale critique ».

Le nombre de pixels en distance séparant l'image réelle de l'image ambiguë étant égal au rapport de la fréquence d'échantillonnage et de la fréquence de répétition des impulsions, rapport égal à 10.000 (cas d'ERS 1), compte tenu des plus faibles valeurs réalistes du décalage relatif, les images ambiguës restent décalées de plusieurs dizaines de pixels en distance lorsque les images réelles coïncident. Les ambiguïtés en distance ne donnent donc pas de combinaison cohérente.

Sur un plan mathématique, soit la fréquence porteuse du radar $f_c$, la fréquence d'échantillonnage en distance $f_d$ et la fréquence d'émission des impulsions $f_a$. Reprenons le thème du décalage des ambiguïtés en distance. Supposons que la roue soit réglée à $\alpha$ fois la base critique verticale ($0<\alpha<1$). On se décale donc d'un pixel tous les n pixels avec : $n = \frac{1}{\alpha}\frac{f_c}{f_d}$ or l'écart en pixels entre deux impulsions successives est égal à : $m=\frac{f_d}{f_a}$. Le décalage résiduel sur les ambiguïtés, en admettant que l'image réelle est bien calée est donc de :

$$\frac{m}{n} = \alpha = \frac{f^2_d}{f_c \ f_a}$$

Dans le cas d'ERS, le terme en fréquence est de 40 donc, même si la base est le dixième de la base critique, le décalage atteint 4 pixels pour les contributions ambiguës. Pour un satellite en bande L, ce terme atteint 150.

Les ambiguïtés en azimut sont caractérisées par une résolution dégradée par rapport aux images nominales à cause du phénomène de migrations paraboliques mal compensé pour les ambiguïtés. Même dans le cas d'un satellite du type ERS, pour lequel les migrations paraboliques sont particulièrement faibles, l'étalement en distance correspond à 2,5 pixels. La désadaptation du traitement conduit à une dégradation du même ordre de grandeur en azimut. La cellule de résolution étant plus grande, les bases critiques horizontales et verticale sont réduites d'un facteur 2,5 dans le cas d'ERS. Dès que la configuration est telle que les bases atteignent 40% des valeurs critiques, les ambiguïtés en azimut cessent de se combiner de façon cohérente.

Dans ces conditions, l'altération des résultats interférométriques de la constellation ne résulte que de la contribution incohérente des ambiguïtés. Même si celles-ci atteignent - 10 dB de l'image réelle en puissance intégrée, elles ne peuvent pas corrompre la phase de l'image réelle avec un écart-type de plus de 5% d'un cycle. Elles ne peuvent en aucun cas biaiser le résultat, seulement le bruiter.

Un radar observant à Doppler nul (perpendiculairement à sa trace), analyse une gamme de fréquence allant de $-\frac{f_a}{2}$ à $+\frac{f_a}{2}$.

Cette plage d'observation correspond à un éloignement, par rapport à la distance de passage au plus proche, proportionnel au carré de la fréquence réduite, soit : $\beta \, f_a^2 \dfrac{2}{4}$

où $\beta$ est un facteur géométrique propre au système radar qui permet d'exprimer l'éloignement en unités de pixel en distance. L'ambiguïté en azimut, produite par les mêmes fréquences décalées de $f_a$, évolue entre les éloignements $\beta \dfrac{f_a^2}{4}$ et $\beta \dfrac{9 f_a^2}{4}$

Comme l'ambiguïté est traitée de la même façon que l'image réelle, les éloignements de cette dernière sont compensés. Il reste donc un éloignement résiduel compris entre 0 et $2\beta \, f^2 a$. « L'étalement en distance » de la cible ambiguë atteint huit fois la valeur maximale de l'éloignement de la cible normale. Pour le satellite ERS, l'étalement vaut 2,5 pixels en distance. Pour un satellite en bande L, tel que J-ERS1, l'étalement atteint 150 pixels. L'étalement en distance conduit à un étalement du même ordre en azimut, en nombre de pixels. La cible ambiguë est donc une « tache » dont la réponse impulsionnelle est assez large et qui sort très rapidement des conditions interférométriques. Par exemple, une constellation interférométrique placée derrière un satellite en bande L rend ses ambiguïtés en azimut incohérentes avant que la base verticale n'atteigne 1% de la base verticale critique. La dégradation de la résolution en azimut induit de même une sortie rapide de l'effet interférométrique à cause de la base horizontale critique.

Interférométrie perpendiculaire

Si la distance verticale B entre les récepteurs est inférieure à $B_{cp}$, les signaux qu'ils reçoivent sont indépendants dans la proportion $B/B_{cp}$, mais cohérents pour le reste, de façon similaire à ce qui se passe pour l'interférométrie le long de la trace. La comparaison des phases des deux images acquises par les récepteurs permet alors de calculer la topographie du terrain. La sensibilité topographique peut être exprimée par l'altitude d'ambiguïté, dont l'expression ici est:

$$h_a \approx \frac{\lambda R}{B}$$

Dispositif de l'invention

On a schématisé sur les figures 4 & 5 une constellation conforme à l'invention de satellites récepteurs S synchrones entre eux qui décrivent sur une période orbitale une ellipse G autour de la position qu'aurait un satellite émetteur qui serait isochrone du satellite émetteur et qui décrirait une orbite dont l'excentricité n'aurait pas été modifiée.

La répartition régulière des arguments de périgée des satellites récepteurs le long de l'orbite se traduit par une position régulière des satellites récepteurs sur l'ellipse en question, qui est parcourue à vitesse angulaire constante, vue de son centre.

Le petit rayon **r** de l'ellipse (vertical) est relié à l'excentricité additionnelle **e** des récepteurs et au demi grand axe a de l'orbite de l'émetteur par la relation: **r = a . e**. Le grand rayon de l'ellipse (horizontal) est le double du petit rayon.

L'ellipse étant parcourue à vitesse angulaire constante peut être considérée comme un cercle qui aurait subi une élongation horizontale d'un facteur deux. Les distances horizontales tirées à partir du cercle devront donc être multiplié par deux.

Une constellation qui comprendrait deux satellites récepteurs, présenterait l'ensemble des possibilités offertes par l'invention, mais pas en permanence, car selon leurs positions sur l'ellipse interférométrique, ces satellites seraient tantôt «l'un au dessus de l'autre», ce qui permet une partie des applications, ou bien «l'un à côté de l'autre», ce qui permet les autres applications. C'est avec trois satellites que la constellation atteint sa pleine efficacité géométrique, en permettant toutes les applications en permanence.

En effet, en raisonnant sur un cercle, lorsque trois satellites récepteurs $S_1$, $S_2$, $S_3$ occupent les sommets d'un triangle équilatéral, les bases verticales et horizontales varient dans des limites très étroites. Les positions des satellites sur le cercle sont, respectivement, en fonction du temps t :

$$X_1 = r \cos\left(\frac{2\pi}{T} t\right) \qquad \text{et} \qquad Y_1 = r \sin\left(\frac{2\pi}{T} t\right)$$

$$X_2 = r \cos\left(\frac{2\pi}{T} t + \frac{\pi}{3}\right) \quad \text{et} \quad Y_2 = r \sin\left(\frac{2\pi}{T} t + \frac{\pi}{3}\right)$$

$$X_3 = r \cos\left(\frac{2\pi}{T} t + \frac{2\pi}{3}\right) \quad \text{et} \quad Y_3 = r \sin\left(\frac{2\pi}{T} t + \frac{2\pi}{3}\right)$$

où T est la période orbitale (isochrone de E) et r est le rayon de la "roue interférométrique", que l'ensemble des récepteurs parcourent pendant la période orbitale.

Les bases horizontales ou verticales possibles sont les valeurs de:

$X_1 - X_2, X_2 - X_3, X_3 - X_1, Y_1 - Y_2, Y_2 - Y_3, Y_3 ⁝ Y_1$

On constate que:

$1.5r < Max(X_1 - X_2, X_2 - X_3, X_3 - X_1) < \sqrt{3}r$

Ces deux bornes étant très peu différentes, on peut disposer d'une base interférométrique stable en horizontal comme en vertical, l'encadrement étant également valable pour les valeurs y. En choisissant r de telle sorte que les surfaces interférométriques des récepteurs se recouvrent (intersection non nulle), on peut réaliser de l'interférométrie le long de la trace et de l'interférométrie perpendiculaire. La proportion de signal utile pour ces opérations est égale à la surface d'intersection rapportée à la surface interférométrique d'un récepteur. La résolution qui peut être obtenue par combinaison des signaux reçus par la constellation de satellites récepteurs est égale, en azimut, à la résolution nominale du radar E multipliée par $B_C$ et divisée par la longueur $L_C$ de la réunion des surfaces interférométriques des récepteurs et, en distance, par la résolution nominale de E en distance multipliée par $B_{CP}$ et divisée par la hauteur Hc de cette réunion (figure 4).

L'émetteur peut se trouver au centre de l'ellipse, ou bien devancer ou suivre "l'orbite" du centre de l'ellipse. Il peut également avoir une longitude du noeud ascendant légèrement différente, ce qui limite les risques de collision avec les satellites de la constellation. L'écart entre l'émetteur et la constellation peut atteindre deux ou trois dizaines de kilomètres, voire plus, sans inconvénient. Les effets recherchés dépendent essentiellement de la configuration de la constellation elle-même.

On peut aussi doter les membres de la constellation de longitudes de noeud ascendant légèrement différentes, mais celles-ci ne devront pas conduire à des écarts de trajectoires dépassant une faible fraction du rayon typique de l'ellipse interférométrique, sous peine de remettre en cause ou de modifier fortement les utilisations décrites.

Les inclinaisons de l'émetteur et des récepteurs doivent par contre rester très voisines, sous peine de déformation rapide de la constellation.

Géométrie de la constellation

Le calcul précis du relief ainsi que a mise en oeuvre de la super-résolution exigent la connaissance précise de la géométrie de la constellation. Cette connaissance peut être obtenue par un système embarqué de type DORIS ou GPS, et ensuite affinée par corrélation entre les images des récepteurs, ou à la suite du réglage de la base interférométrique par élimination des franges résiduelles sur un paysage.

Si l'on dispose d'un modèle numérique de terrain global de résolution moyenne l'injection de ce modèle en préalable aux traitements de calcul d'altitude incerférométrique produira des résidus dont l'écart-type correspondra à l'amélioration de résolution apportée par l'utilisation de l'invention. Un modèle grossier même très médiocre (par exemple 30m d'erreur verticale rms sur des cellules de 100 mètres de côté) permettrait de caler très précisément la base interférométrique. En effet, la moyenne du résidu sur une surface de 10 km de côté, calculée aux quatre coins de l'interférogramme, correspond à une incertitude verticale inférieure au centimètre compte tenu de l'énorme intégration (ceci à condition que le modèle grossier soit imprécis, mais non biaisé). La connaissance centimétrique d'une base stéréoscopique kilométrique garantit une contribution à l'erreur très inférieure au mètre, même pour des variations d'altitude de plusieurs kilomètres. L'injection d'un modèle numérique même grossier, permet par ailleurs de se passer de la technique de «déroulement de franges» puisque les résidus seront essentiellement contenus à l'intérieur d'une frange.

Il existe une autre manière de connaître la position des satellites de la constellation en utilisant le signal de l'émetteur en visée directe.

Dans l'hypothèse où la donnée des micro-satellites de la constellation enregistrée en continu contiens le signal direct de l'émetteur (éventuellement écrêté), ainsi que les signaux indirects provenant de la réflexion du signal direct par les autres satellites de la constellation, situés typiquement à une dizaine de kilomètres les uns des autres, le signal direct permet de mesurer les caractéristiques de l'impulsion ainsi que le rythme d'impulsion.

Sur la figure 5, analogue à la figure 4, on a indiqué les distances D1, D2, D12, D13 et D23 que l'on désire calculer, dans le cas d'une configuration à trois satellites.

Le mouvement relatif des micro-satellites entre eux et de l'émetteur est au plus de l'ordre de quelques dizaines de kilomètres par heure (un tour par orbite), soit typiquement dix- mètres par seconde (en bande L, pour laquelle le diamètre de la roue est grand). Au rythme d'émission des impulsions, toujours supérieur au kilohertz, chaque impulsion subit par rapport à l'impulsion précédente un déphasage inférieur au centimètre, soit 2 à 3% d'un tour de phase (toujours en bande L). Ceci est vrai également en bande C parce que le rayon de la roue est réduit en proportion. Les différents échos peuvent donc être extraits de la télémesure par une compression en distance suivie d'une analyse spectrale en azimut, dans laquelle ils apparaîtront comme des pics très proches de la fréquence nulle. L'analyse de la fréquence exacte de ces pics donne les vitesses de rapprochement des micro-satellites et de l'émetteur. L'observation de ces vitesses pendant une minute permet de caractériser des vitesses correspondants à des déplacements d'une fraction de la longueur d'onde en une minute. La détermination des distances effectuée par moyenne sur une minute, soit de l'ordre de 100000 impulsions, permettrait théoriquement des précisions inférieures à dix centimètres. Il est clair que la limite de la mesure sera plutôt imposée par la forme des satellites et la méconnaissance des conditions exactes de réflexion. Cette limite est de l'ordre d'un mètre compte tenu de tailles typiques des micro-satellites.

La corrélation des images de chaque micro-satellites permet de connaître les distances $R_{21}$ et $R_{23}$ (qui ne sont pas dans le plan de la constellation), ainsi que $A_{12}$, $A_{13}$ (qui sont des retards). Les précisions associées à ces mesures sont de l'ordre de quelques centièmes de pixels, par comparaison avec nos moyens actuels et sans préjuger d'éventuels progrès sur les techniques de corrélation. Dans l'hypothèse où la totalité des images est utilisée pour cette détermination, toutes les distances seront connues avec des précisions de quelques dizaines de centimètres, voire un mètre. La bonne séparabilité des mesures fournira une localisation de même précision sur la position des satellites qui sera renforcée dans la direction perpendiculaire à la figure par le réglage fin de la base interféromérique.

Emetteur radar

L'émetteur E est principalement un satellite d'observation radar, éventuellement en panne partielle. Par exemple, un satellite dont l'organe de transmission de données est en panne peut encore être utilisé comme émetteur. On peut aussi utiliser un émetteur spécifique, éventuellement dépourvu de réception et de transmission de télémesure de charge utile.

On peut avantageusement utiliser un émetteur radar doué d'autonomie énergétique et notamment un émetteur tel que défini dans la publication WO 97/34801.

Il s'agit d'un émetteur essentiellement constitué d'un élément formant antenne (ou « voile radar ») qui s'étend sensiblement dans un plan passant par le centre de la terre et qui porte sur une face maintenue orientée vers le soleil les cellules solaires d'un générateur solaire qui suffit à l'alimentation de l'émetteur.

Sur la figure 7 qui reproduit la figure 4 de la publication précitée, on a référencé par 12 le module de servitude du satellite émetteur conforme à la publication précitée, les références 11 et 13 désignant respectivement l'élément formant antenne et les cellules du générateur solaire.

Le satellite illustré est remarquable à différents aspects.

Son orbite est une orbite basse et l'élément 11 formant antenne s'étend sensiblement dans un plan passant par le centre de la terre (angle roulis de 90°). Il a la capacité éventuelle de rayonner sur ses deux faces.

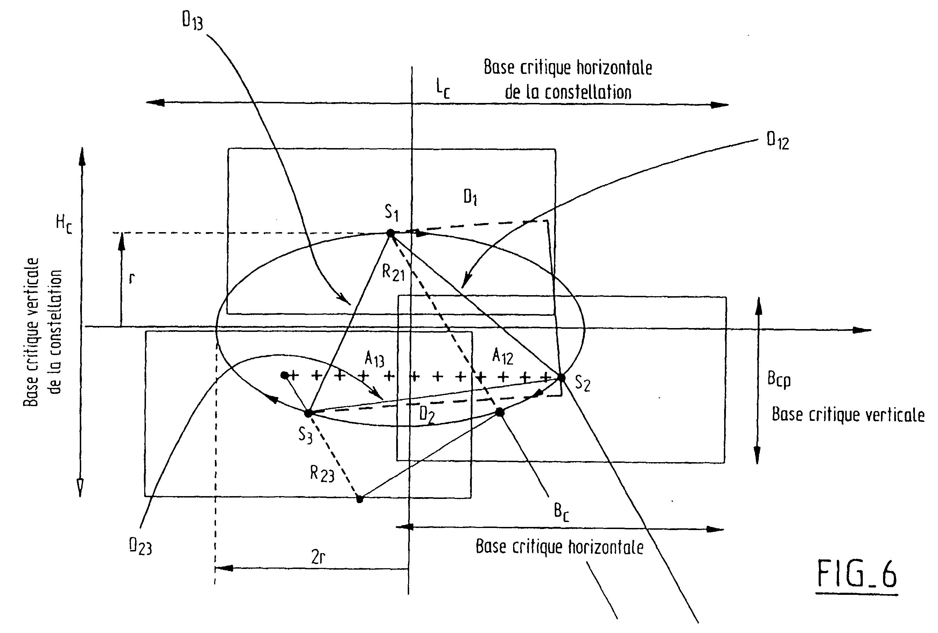

Par ailleurs, la hauteur H de cet élément 11 définie par sa dimension le long de l'axe de gravité est soit naturellement très supérieure à sa dimension L dans sa direction perpendiculaire (direction du vecteur vitesse V sur la figure 6 qui illustre le cas où le plan du satellite est confondu avec le plan de son orbite) soit complétée selon la hauteur H par une surface en formant pas antenne, éventuellement partiellement creuse, de sorte que le satellite est naturellement stabilisé par gradient de gravité.

Egalement, les cellules solaires 13 sont disposées sur une face de l'élément 11 formant antenne, éventuellement les deux.

En outre, l'élément 11 comporte répartis sur sa surface des points de contrôle en phase et en amplitude de l'onde émise ou reçue.

Il tolère une structure souple dont les déformées et les erreurs d'attitude absolue sont mesurées à partir d'un traitement des mesures de phases fournies par des capteurs GPS répartis sur sa surface et compensées ensuite par les moyens de contrôle.

L'antenne du satellite est de préférence dans le plan de l'orbite et l'orbite du satellite est de préférence héliosynchrone, de façon à préserver un angle d'aspect solaire minimal avec les cellules solaires placées sur une face particulière de l'élément 11 formant antenne. La face antenne occupe alors la face ombrée de l'élément 11 et peut également occuper l'autre face sur des parties non occupées par les cellules solaires. Une heure locale 6 H ou 18 H est optimale car l'écart angulaire est limité aux environs de 30° (effet cumulé de l'inclinaison de l'orbite et de l'ascension du soleil). Mais toutefois, la grande surface de cellules solaires ainsi réalisable permet d'envisager des écarts plus importants par rapport au plan d'orbite 6H/18H.

Bien que l'héliosynchronisme à heure locale figée facilité la conception thermique de l'élément 11, le satellite peut aussi être conçu pour pouvoir changer d'heure locale y compris de part et d'autre du plan 12/24H, ou même fonctionner avec une heure locale dérivante (plus d'héliosynchronisme mais orbite toujours inclinée). Il suffit pour cela que les deux faces de l'élément 11 disposent d'espace couvert de cellules solaires au prix d'un accroissement de la surface totale de cellules solaires. Il est certain toutefois que le fonctionnement ne pourra être assuré, chaque fois que l'heure locale est proche de 12H/24H.

La densité des cellules solaires 13 au dos de l'élément 11 peut être choisie de façon à couvrir les besoins énergétiques de ladite antenne sans aucun relais de batterie. Au besoin, l'élément 11 peut inclure des portions ne formant pas antenne mais portant des cellules solaires.

Ainsi, la réutilisation de la structure mécanique de l'élément 11 permet déjà d'obtenir un générateur solaire très puissant, voire même bien plus puissant que ceux accompagnant les modules de servitude standard les plus performants, elle permet en outre la simplification a l'extrême du sous-système d'alimentation du module de servitude 12 lorsque ce dernier n'a plus qu'à prendre en charge ses propres besoins.

Chaque équipement ou groupe d'équipement de l'élément 11 peut être en effet couplé directement à sa source énergétique de sorte que les fonctions de transport et de conversion énergétiques sont simplifiées et ne mettent pas en jeu le module de servitude 12, ni même une liaison avec ce dernier ;

Ce concept de voile radar peut être envisagé pour réaliser un « illuminateur » en fonctionnement quasi-permanent qui permettra d'alimenter en signal une constellation de micro-satellites de préférence six micro-satellites agencés selon la présente invention.

Les avantages d'une telle combinaison de systèmes sont :

- les avantages de la voile radar : la simplicité et le bas coût
- les avantages de la présente invention : la combinaison cohérente en toute circonstance (interférométrie et super-résolution), la discrétion du système passif et la difficulté à le brouiller.

La combinaison conduit donc à un système radar super-résolu, difficile à brouiller et peu coûteux.

Récepteurs radar

Un satellite récepteur de la constellation est caractérisé par sa simplicité et son faible coût. N'ayant pas à émettre de signal, sa consommation énergétique est faible, il ne nécessite que de petits moyens de génération et de stockage de l'énergie. On laisse avantageusement la responsabilité de la forme du diagramme d'antenne et du signal émis à l'émetteur. Le récepteur peut donc ce contenter d'une antenne de faible diamètre, qu'il n'est pas nécessaire de déployer. En conséquence, il se contente également d'un pointage plus grossier que celui de l'émetteur.

En revanche, la géométrie de la constellation doit être bien tenue, ce qui exige entre autres choses, le synchronisme rigoureux des satellites récepteurs. Le synchronisme du satellite émetteur peut être relâché dans certains cas en particulier si la capacité de pointage de la constellation des satellites récepteurs permet de suivre la zone éclairée au sol par le satellite émetteur même si celle-ci défile. On peut penser à utiliser comme émetteur un satellite de télécommunication éclairant une zone assez vaste au sol et situé à une altitude très élevée. La constellation des récepteurs peut alors viser cette zone même si elle ne se déplace pas avec elle (les satellites de télécommunication sont en général géostationnaires. Il en est de même de leur zone d'éclairement). En règle générale, plus les orbites sont basses, plus le synchronisme doit être respecté. Pour les orbites héliosynchrones, le synchronisme garantit non seulement l'absence de défilement de la zone éclairée, mais aussi la possibilité de rester en permanence au voisinage du satellite émetteur, pour en exploiter le rayonnement. En tous cas, les récepteurs doivent disposer de moyens de positionnement très précis. Un point favorable au maintien de la constellation est la similitude des perturbations orbitales subies par l'émetteur et la constellation de récepteurs. La forme identique de ces derniers garantit même la quasi identité des freinages atmosphériques, un point moins critique pour l'émetteur puisque le paramètre X (figures 1 et 2) peut varier dans des proportions assez larges. Le risque de collision peut être limité par l'éloignement du récepteur (distance X de la figure 1) et l'utilisation de plans orbitaux légèrement différents pour les récepteurs. Par exemple, une différence de longitude de 50 à 100 mètres entre les noeuds ascendants des récepteurs est une sécurité. Ces différences de longitude ne doivent cependant pas excéder une faible fraction du rayon typique de l'ellipse interférométrique. Les trajectoires des récepteurs ne se rencontrent en principe jamais du fait des excentricités et des calages de périgées. L'émetteur peut sans inconvénient présenter une différence de plan orbital beaucoup plus marquée ( 10 à 20 kilomètres par exemple).

Les récepteurs doivent échantillonner le signal de l'émetteur avec un rythme suffisant. Le signal enregistré par les récepteurs n'est donc pas organisé sous forme de lignes résultant de chaque impulsion, mais est continu. Le signal des récepteurs doit être resynchronisé, au sol, en utilisant, par exemple, l'algorithme des voisins. Si l'antenne des récepteurs est plus petite que celle de l'émetteur, le niveau de signal sera plus faible.

A titre d'exemple, un satellite récepteur est associé au satellite ERS1, émettant en bande C ($\lambda$ = 56 mm). L'antenne est circulaire, avec un diamètre d'environ un mètre. Compte tenu de la baisse du gain, l'enregistrement se fait sur deux bits avec un rythme d'échantillonnage complexe de 16 MHz. Ce rythme est constant et ne nécessite aucun dispositif de régulation. Il crée une télémesure de 64 Mbit par seconde, similaire à celle d'autres systèmes, tels que SPOT. Le récepteur peut donc utiliser des moyens existants (mémoire état solide et canal de télémesure classiques).

On peut utiliser un récepteur générique, capable de s'adapter à plusieurs satellites, éventuellement dans des bandes différentes. Un tel satellite peut être doté d'un système de propulsion électrique (puisque la charge utile consomme peu) lui permettant plusieurs changements d'orbite, et de passer ainsi d'un «client» émetteur à un autre, au cours de sa vie. Un récepteur adaptable permet aussi l'utilisation de la constellation pour la localisation précise de sources d'émissions radioélectriques au sol.

Applications

On décrira ci-après, à titre d'exemples, des applications d'un dispositif selon la présente invention.

1) SATELLITE MILITAIRE A PARTIR D'UN «RAYONNEMENT» CIVIL

En appliquant la constellation interférométrique, il est possible d'utiliser un satellite radar pour des besoins civils et militaires simultanés, mais de caractéristiques techniques et opérationnelles très différentes. L'émetteur est par exemple un satellite civil de performance moyenne (environ dix mètres de résolution). La constellation réceptrice, dont les surfaces interférométriques doivent se recouper, comprend une (figure 4) ou deux «roues interférométriques» (figure 5).

Les avantages sont:

- la plus grande difficulté à brouiller le système militaire. Le brouillage de l'émetteur civil n'a pas d'effet sur les images des récepteurs militaires. La position de ces derniers peut rester inconnue de l'adversaire car ils sont discrets. On peut d'ailleurs déplacer fréquemment la constellation réceptrice par rapport à l'émetteur. L'écart angulaire entre les rayons incidents et réfléchis reste cependant suffisamment faible pour que l'image garde les mêmes caractéristiques, et que sa lecture ne nécessite pas d'entraînement particulier.
- L'intérêt antibrouillage de la constellation est simplifié par le caractère légèrement bistatique des images obtenues selon l'invention il est en effet impossible d'aveugler la constellation par un dispositif passif. Alors qu'un « coin réflecteur » géant pourrait masquer une zone de plusieurs dizaines de kilomètres carrés en saturant la réception d'un satellite classique, la différence des angles d'incidence et de réflexion pour la constellation rendrait ce coin inopérant. En effet, plus un coin réflecteur est grand et plus il est directif.
- la haute résolution inaccessible aux utilisateurs civils. La haute résolution résulte de la combinaison cohérente des images des récepteurs, dont les télémesures ne sont pas accessibles aux utilisateurs civils. La résolution peut être meilleure que ne le laisserait croire la bande allouée à une certaine longueur d'onde. Par exemple, même si un système civil en bande L est limité juridiquement à 30 MHz, la constellation peut créer une image équivalente à une très large bande (par exemple 100 MHz), ce qui donne accès à des largeurs de bande relatives intéressantes.
- L'utilisation de la base horizontale permet soit d'améliorer la résolution en azimut, soit de comparer des images de résolution nominale séparées par, typiquement, une seconde. Cette caractéristique permet de détecter des cibles mobiles par la différence de leurs positions dans deux images séparées horizontalement.
- l'augmentation de résolution d'un radar doit généralement s'accompagner d'une augmentation de puissance, en raison de la taille plus petite de la cellule observée. Dans le cas de l'invention, une augmentation de puissance peut être obtenue par la combinaison cohérente des différentes surfaces d'antenne des micro-satellites. Dans une configuration à six micro-satellites, la taille combinée des antennes de réception peut dépasser la taille de l'antenne de l'émetteur ; Cette situation est plus avantageuse qu'elle ne paraît car il est bien plus facile de construire et de déployer indépendamment six antennes de quatre mètres carrés qu'une seule de 25 mètres carrés.
- Un autre avantage de l'invention est la vitesse d'acquisition. En radar à synthèse d'ouverture classique, l'amélioration de la résolution en azimut s'accompagne d'un éclairement plus long des cibles, soit parce que l'antenne est plus courte dans la direction du vol, soit parce qu'on la maintient orientée vers la cible (mode Spotlight). L'invention réalise la super-résolution en azimut de façon parallèle, sans augmenter le temps d'illumination nécessaire pour une cible donnée.

2) MESURE DES COURANTS MARINS

L'utilisation de la base horizontale permet d'établir la carte des courants marins. En supposant que l'on doive limiter la durée d'observation à 0.1 seconde pour des raisons physiques, une observation d'un centième de tour de phase (soit 0.3 mm en bande C) conduit à une estimation dont la précision est de 3 mm par seconde dans la direction d'observation du satellite. Avec un point de vue du type de celui d'ERS1 (un angle d'incidence de 23°), cette précision est dégradée d'un facteur 2,5 dans le sens perpendiculaire à la trace du satellite, et d'un facteur supplémentaire supérieur à 3 si la direction du courant diffère de moins de 20° de la direction de vol du satellite. Dans le cas assez défavorable d'un courant à 20° de l'azimut des satellites, la précision de mesure est de 1/20 knts. L'observation d'un centième de tour est réaliste si l'on peut calculer la moyenne du signal sur des surfaces de l'ordre de l'hectare.

Il y aura coexistence avec les effets interférométriques liés à la base verticale. Cependant, puisque la topographie des surfaces océaniques est simple et connue, on peut aisément éliminer la contribution "verticale", qui prend la forme d'un réseau régulier de franges à retirer.

3) MESURE DE LA TOPOGRAPHIE MONDIALE

Sur les terres émergées, la base verticale permettra de calculer la topographie mondiale ou d'en améliorer une connaissance préalable. La simultanéité des observations élimine les effets atmosphériques, principale limitation actuelle de cette application. La configuration orbitale permet de créer une base stable (comprise entre 1.5 et 1.7 fois le rayon vertical de la "roue") quelle que soit la position sur la Terre. On peut procéder à un changement de ce rayon, afin de calculer d'abord un modèle grossier de la topographie, qui ne nécessitera pas de "déroulement de phase", puis, par augmentation du rayon, de calculer un modèle fin pour lequel le modèle grossier suffira à "dérouler les phases".

Par exemple ; une constellation couplée au satellite ERS 1 ou au satellite ERS2 donnerait avec un rayon de 100 mètres (i.e. une base de 150 m environ), une altitude d'ambiguïté de trois cents mètres. La connaissance préalable de la topographie terrestre à trois cents mètres près permettra d'éviter le recours au déroulement de phase. La précision de la topographie obtenue à l'issue de ce premier passage serait meilleure que 30 mètres.

Avec un rayon de 1000 mètres (i.e. une base de 1500 m environ), on obtiendrait une altitude d'ambiguïté de trente mètres. La topographie issue de la première étape permettrait de dérouler les franges automatiquement. La précision de la topographie résultante de ce deuxième passage serait meilleure que 3 mètres.

Avec un rayon maximal (i.e. une base proche de la limite ultime de 5 km), on pourrait, quand le terrain s'y prêtera, parvenir à des résultats encore plus fins, d'autant plus que la base permettrait déjà l'amélioration de la résolution en distance.

4) INTERFEROMETRIE DIFFERENTIELLE

Le dispositif de l'invention permet surtout les applications non différées ou peu différées (amélioration de la résolution en distance et en azimut, interférométrie instantanée ou le long de la trace). Il a également un intérêt pour l'interférométrie différentielle dans la mesure où il permet de relâcher les contraintes orbitales. Outre la conservation des cibles élémentaires, au sol, l'interférométrie différentielle exige la conservation des caractéristiques spectrales en azimut et en distance. En d'autres termes, les deux passages du satellite doivent présenter une intersection non nulle de leurs surfaces interférométriques. En augmentant fortement la taille de cette surface, la constellation permet de remplir plus facilement ces conditions, ou de capter toute l'archive d'un satellite radar ancien dont le contrôle orbital aurait été peu performant.

L'invention n'est pas limitée à ces exemples.

**Revendications**

1. Dispositif d'interférométrie radar comprenant au moins un satellite émetteur (E) et au moins une constellation de satellites récepteurs (S), **caractérisé en ce que** les satellites sont placés sur des orbites choisies de façon que les satellites récepteurs visent la zone éclairée au sol par le satellite émetteur et telles que :

- leurs grands axes ont même longueur de sorte que les satellites sont rigoureusement synchrones,
- leurs foyers sont séparés par une distance qui est la même pour chacune des orbites des satellites récepteurs et qui est supérieure à la distance des foyers de l'orbite du satellite émetteur, en sorte que l'excentricité de l'orbite d'un satellite récepteur diffère de celle de l'orbite du satellite émetteur,
- les arguments de leurs périgées ont des valeurs réparties régulièrement sur 360° en sorte que pendant une période orbitale les satellites récepteurs parcourent une ellipse (G) sur laquelle ils sont répartis régulièrement, ladite ellipse étant centrée sur la position qu'aurait le satellite émetteur si son orbite avait même longitude du noeud ascendant et même phasage que les orbites des satellites récepteurs.

2. Dispositif selon la revendication 1, dont le satellite émetteur est synchrone des satellites récepteurs.

3. Dispositif selon la revendication 1 ou 2 dont les orbites sont héliosynchrones.

4. Dispositif selon l'une des revendications précédentes et qui comprend un ou plusieurs groupes de trois satellites récepteurs ($S_1$, $S_2$, $S_3$ ; $S_4$, $S_5$, $S_6$) placés sur une ou plusieurs ellipses concentriques.

5. Dispositif selon l'une des revendications précédentes et qui comprend un satellite émetteur (E) placé sur ladite ellipse qui fait partie de ladite constellation.

6. Dispositif selon l'une des revendications précédentes qui comprend un satellite émetteur (E) choisi dans le groupe des satellites d'observations radar, tels que ERS-1 et ERS-2, Radarsat et J.ERS-1.

7. Dispositif selon l'une des revendications précédentes et dont les satellites récepteurs (5) sont conçus pour enregistrer en continu le signal de la zone éclairée au sol par le satellite émetteur, des moyens étant prévus pour resynchroniser le signal ainsi enregistré sous forme de lignes successives rangées par distances croissantes.

8. Dispositif selon l'une des revendications 1 à 6 et qui comprend un satellite émetteur (E) qui comporte un élément (1) formant antenne qui s'étend sensiblement dans un plan passant par le centre de la terre et qui porte sur une face maintenue orientée vers le soleil les cellules solaires (13) d'un générateur solaire qui alimente l'émetteur.

9. Dispositif selon la revendication 1 et qui comprend six satellites récepteurs ($S_1$ - $S_6$).

**Patentansprüche**

1. Vorrichtung zur Radar-Interferrometrie, die wenigstens einen Sendesatelliten (E) und wenigstens eine Konstellation von Empfangssatelliten (S) umfaßt, **dadurch gekennzeichnet, daß** die Satelliten sich auf Umlaufbahnen befinden, die so gewählt sind, daß die Empfangssatelliten auf die Zone ausgerichtet sind, die am Boden durch den Sendesatelliten angestrahlt wird, und derart, daß:

   - ihre großen Achsen dieselbe Länge haben, derart, daß die Satelliten streng synchron sind,
   - ihre Brennpunkte durch einen Abstand getrennt sind, der für jede der Umlaufbahnen der Empfangssatelliten gleich ist und der größer als der Abstand der Umlaufbahnbrennpunkte des Sendesatelliten ist, derart, daß die Exzentrizität der Umlaufbahn eines Empfangssatelliten von derjenigen der Umlaufbahn des Sendesatelliten verschieden ist,
   - die Winkel ihrer Perigäen Werte haben, die gleichmäßig über 360° verteilt sind, derart, daß während einer Umlaufperiode die Empfangssatelliten eine Ellipse (G) durchlaufen, auf der sie gleichmäßig verteilt sind, wobei die Ellipse auf der Position zentriert ist, die der Sendesatellit hätte, wenn seine Umlaufbahn dieselbe Länge des aufsteigenden Knoten und dieselbe Phasenlage wie die Umlaufbahnen der Empfangssatelliten hätte.

2. Vorrichtung nach Anspruch 1, deren Sendesatellit synchron mit den Empfangssatelliten ist.

3. Vorrichtung nach Anspruch 1 oder 2, deren Umlaufbahnen heliosynchron sind.

4. Vorrichtung nach einem der vorhergehenden Ansprüche, die eine oder mehrere Gruppen von drei Empfangssatelliten ($S_1$, $S_2$, $S_3$; $S_4$, $S_5$, $S_6$) umfaßt, die auf einer oder mehreren konzentrischen Ellipsen laufen.

5. Vorrichtung nach einem der vorhergehenden Ansprüche, die einen Sendesatelliten (E) umfaßt, der auf der Ellipse läuft, die zu der Konstellation gehört.

6. Vorrichtung nach einem der vorhergehenden Ansprüche, die einen Sendesatelliten (E) umfaßt, der aus der Gruppe der Radarbeobachtungssatelliten gewählt ist, wie etwa ERS-1 und ERS-2, Radarsat und J.ERS-1.

7. Vorrichtung nach einem der vorhergehenden Ansprüche, deren Empfangssatelliten (S) dafür konzipiert sind, fortlaufend das Signal der vom Sendesatelliten angestrahlten Zone am Boden aufzuzeichnen, wobei Mittel vorgesehen sind, um das so aufgezeichnete Signal wieder zu synchronisieren, in Form von aufeinanderfolgenden Linien, die mit wachsendem Abstand angeordnet sind.

**8.** Vorrichtung nach einem der Ansprüche 1 bis 6, die einen Sendesatelliten (E) umfaßt, der ein Element (1) beinhaltet, das eine Antenne bildet, die sich im wesentlichen in einer Ebene erstreckt, die durch das Erdzentrum läuft, und die auf einer Seite, die zur Sonne hin orientiert gehalten wird, Solarzellen (13) eines Sonnengenerators trägt, der den Sender versorgt.

**9.** Vorrichtung nach Anspruch 1, die sechs Empfangssatelliten ($S_1$-$S_6$) umfaßt.

**Claims**

**1.** Radar interferometry apparatus comprising at least one emitter satellite (E) and at least one constellation of receiver satellites (S), the apparatus being **characterized in that** the satellites are placed on orbits selected in such a manner that the receiver satellites aim at the zone of the ground that is illuminated by the emitter satellite, and such that:

- the major axes thereof have the same length so that the satellites are accurately synchronous;
- the focuses are separated by a distance which is the same for each of the orbits of the receiver satellites and which is greater than the distance between the focuses of the orbit of the emitter satellite, such that the eccentricity of a receiver satellite orbit is different from that of the emitter satellite orbit; and
- the arguments of their perigees have values that are uniformly distributed over 360° such that during one orbital period the receiver satellites travel round an ellipse (G) over which they are uniformly distributed, said ellipse being centered on the position that the emitter satellite would have had if its orbit had the same ascending node longitude and the same phasing as the orbits of the receiver satellites.

**2.** Apparatus according to claim 1, in which the emitter satellite is synchronous with the receiver satellites.

**3.** Apparatus according to claim 1 or 2, in which the orbits are heliosynchronous.

**4.** Apparatus according to any preceding claim and comprising one or more groups of three receiver satellites ($S_1$, $S_2$, $S_3$; $S_4$, $S_5$, $S_6$) placed on one or more concentric ellipses.

**5.** Apparatus according to any preceding claim and comprising an emitter satellite (E) placed on said ellipse which forms a portion of said constellation.

**6.** Apparatus according to any preceding claim which comprises an emitter satellite (E) selected from the group of radar observation satellites such as ERS-1 and ERS-2, Radarsat, and J.ESR-1.

**7.** Apparatus according to any preceding claim in which the receiver satellites (5) are designed to record continuously the signal from the zone on the ground illuminated by the emitter satellite, means being provided for resynchronizing the signal recorded in this way in the form of successive rows organized by increasing distance.

**8.** Apparatus according to any one of claims 1 to 6 and comprising an emitter satellite (E) which includes an antennaforming element (1) which extends substantially in a plane that contains the center of the earth and which carries solar cells (13) of a solar generator powering the emitter on a face thereof that is kept oriented towards the sun.

**9.** Apparatus according to claim 1, and comprising six receiver satellites ($S_1$ - $S_6$).

FIG_1

FIG_2

FIG_3

FIG_7

ROUE INTERFEROMETRIQUE

$L_C$  Base critique horizontale
de la constellation

$H_C$

Base critique verticale
de la constellation

$r$

$S_1$

$G$

$S_3$

$S_2$

$B_{cp}$
base critique verticale

$E$

Trajectoire de l'émetteur

$2r$

$B_C$
Base critique horizontale

FIG.4

EP 0 996 860 B1

CONFIGURATION A SIX RECEPTEURS

$B_C$ — Base critique horizontale

$B_{Cp}$ — Base critique verticale

$H_C$

Base critique verticale de la constellation

$S_4$

$S_2$

$S_1$

$G_1$

$G_2$

$S_3$

$S_5$

$S_6$

E

Trajectoire de l'émetteur

$L_C$ — Base critique horizontale de la constellation

FIG.5

EP 0 996 860 B1

FIG_6